# EUROPEAN PATENT APPLICATION

(11) **EP 4 545 258 A1**
(43) Date of publication of application: **30.04.2025**
(21) Application number: 23826752.0
(22) Date of filing: 24.03.2023
(51) Int. Cl.: B25J 15/06

(54) **SUCTION DEVICE FOR ROBOT**

(30) Priority: 23.06.2022 JP 2022100858
(71) Applicant: Nitto Kohki Co., Ltd., Tokyo 146-8555 (JP)
(72) Inventor: YAMAMOTO, Kunihiro, Tokyo 146-8555 (JP)
(74) Representative: Klang, Alexander H.
(86) International application number: PCT/JP2023/011787
(87) International publication number: WO 2023/248563

(57) **Abstract**

[Technical Problem] A suction holding apparatus used by being attached to a robot arm is configured to enable the duration time of at least one of a suction holding state and a non-suction holding state to be changed easily on site.

[Solution to Problem] A suction holding apparatus 10 includes a suction pad 16 and a timer 18. The timer 18 is configured to switch between a suction holding state where vacuum suction holding force is produced in the suction pad 16 by a vacuum pump 52 disposed in a casing 32 and a non-suction holding state where no vacuum suction holding force is produced in the suction pad 16. The timer 18 has a knob 62 for setting and changing the duration time of the suction holding state. When the duration time set by the timer 18 has elapsed, the suction holding apparatus 10 switches from the suction holding state to the non-suction holding state.

## Description

### Technical Field:

The present invention relates to a suction holding apparatus for a robot that is configured to be used by being attached to a robot arm. More particularly, the present invention relates to a suction holding apparatus for a robot for holding a workpiece to be transferred by vacuum suction and for transferring the suction-held workpiece. Background Art:

To transfer a workpiece to be transferred by using a robot, it is known practice to transfer the workpiece from a predetermined position to another position by holding the workpiece by vacuum suction using a robot arm including a suction holding apparatus. (Patent Literature 1).

### Citation List:

### Patent Literature:

Patent Literature 1: Japanese Patent Application Publication No. 2021-122872

### Summary of Invention:

### Technical Problem:

The timing of suction hold and release actions of the above-described suction holding apparatus is usually controlled by a control program installed on the robot arm or an external control device that controls the robot arm. The suction hold and release timings may be controlled on the basis of the position of the robot arm and the outputs of various sensors attached to the robot arm. There is, however, a simpler and easier control method, which is based on time. For example, the start timing of suction holding is determined based on information about the position of the robot arm, and the suction holding is released after a predetermined time has elapsed from the start of the suction holding. The duration time of the suction holding state is predetermined in view of the length of time required from the time when a workpiece to be transferred is held by suction to the time when the robot arm reaches a predetermined position, and the determined duration time is preset in the control program. On the other hand, when a robot is installed at a production site, it may be necessary to finely adjust the suction hold and release timings, or it may also be necessary to change the suction hold and release timings along with the change of the workpiece to be transferred or the change of the transfer path. In order to set and change the suction hold and release timings, it is necessary to modify the control program each time there is a need to change the suction hold and release timings. It is, however, difficult or substantially impossible for an operator inexperienced in programming to perform such a program modifying work, and even if possible, it may be troublesome to carry out the program modifications at a production site or the like.

Accordingly, it is an object of the present invention to provide a suction holding apparatus used by being attached to a robot arm, which is configured to enable the duration time of at least one of a suction holding state and a non-suction holding state to be changed easily on site.

### Solution to Problem:

That is, the present invention provides a suction holding apparatus for a robot that is configured to be used by being attached to a robot arm, the suction holding apparatus including a suction holding unit configured to be connected to a vacuum source to suction-hold a workpiece to be transferred, and a timer for switching between a suction holding state where vacuum suction holding force is produced in the suction holding unit by the vacuum source and a non-suction holding state where the vacuum suction holding force is not produced in the suction holding unit, the timer being capable of setting a duration time of at least one of the suction holding state and the non-suction holding state, the timer having a manual operation part for setting and changing the duration time, wherein when the duration time set by the timer has elapsed, the one of the suction holding state and the non-suction holding state is changed to the other.

In the suction holding apparatus, the duration time of at least one of the suction holding state and the non-suction holding state can be changed by operating the manual operation part of the timer. Therefore, it is unnecessary to modify the control program in order to change the duration time, which has been required with the conventional apparatus, and it becomes possible to change the duration time easily on site.

In addition, the timer may be configured to set the duration time of the suction holding state, so that after the duration time has elapsed, the suction holding apparatus is switched from the suction holding state to the non-suction holding state.

In addition, the vacuum source may be a vacuum pump built in the suction holding apparatus.

In addition, the suction holding apparatus may further include a communication part for communication connection to an external control device, and a mode selecting device for selecting between an internal control mode and an external control mode, wherein when the internal control mode is selected, the duration time is set by the timer, and when the external control mode is selected, the duration time is set based on a command from an external control device communicably connected to the communication part.

In addition, the suction holding apparatus may further include an arm fixed unit configured to be fixed to a robot arm, a frame attached to the arm fixed unit, a casing covering at least a part of the frame, and a shaft-shaped member having an upper end portion thereof supported by the frame in the casing and a lower end portion thereof located outside the casing, the shaft-shaped member extending vertically from the upper end portion to the lower end portion, the suction holding unit provided at the lower end portion, the shaft-shaped member having a passage formed therein to constitute a part of a flow path between the suction holding unit and the vacuum source, wherein a downward load applied to the suction holding unit is supported by the arm fixed unit through the shaft-shaped member and the frame.

With the above-described structure, a downward load applied to the suction holding unit by a workpiece to be transferred which is suction-held by the suction holding unit can be supported by the arm fixed unit without being applied to the casing. Accordingly, there is no need to form the casing into a structure having a high mechanical strength.

Embodiments of a suction holding apparatus for a robot according to the present invention will be explained below based on the accompanying drawings.

### Brief Description of Drawings:

Fig. 1 is a front exterior view of a suction holding apparatus according to an embodiment of the present invention.
Fig. 2 is a side exterior view of the suction holding apparatus shown in Fig. 1.
Fig. 3 is a front view showing the internal structure of the suction holding apparatus shown in Fig. 1.
Fig. 4 is a side view showing the internal structure of the suction holding apparatus shown in Fig. 1.
Fig. 5 is a schematic diagram showing the flow path structure of the suction holding apparatus shown in Fig. 1.

### Description of Embodiments:

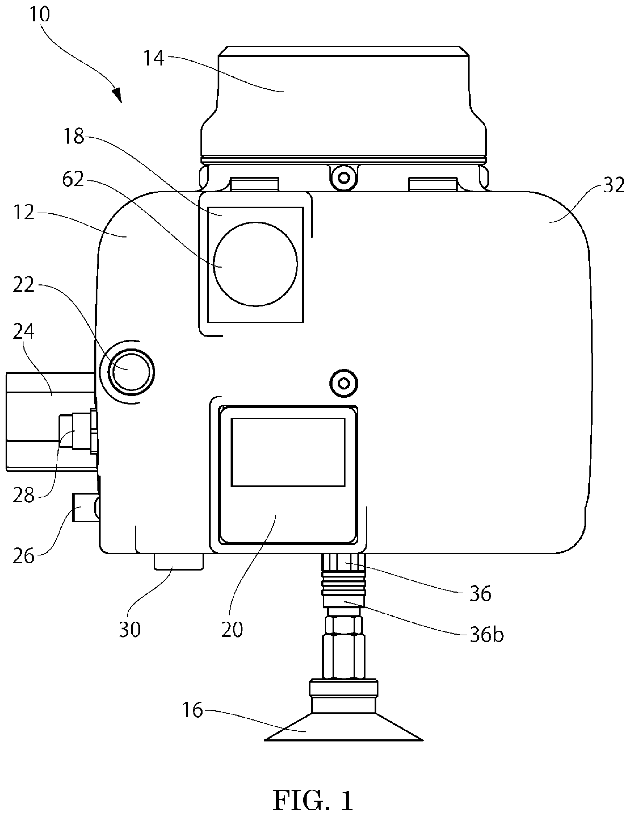

A suction holding apparatus 10, which is configured to be used for a robot, according to an embodiment of the present invention includes, as shown in Figs. 1 to 4, a body unit 12, an arm fixed unit 14 located at the top of the body unit 12 so as to be fixed to a robot arm, and a suction pad (suction holding unit) 16 located to project downward from the bottom of the body unit 12. The suction holding apparatus 10 is configured as described below. When the suction pad 16 is pressed against a workpiece to be transferred and thus displaced upward relative to the body unit 12, a negative pressure is produced in the suction pad 16 to hold the workpiece by suction, and when a preset duration time has elapsed from the start of the suction holding, the negative pressure is removed to release the suction holding of the workpiece.

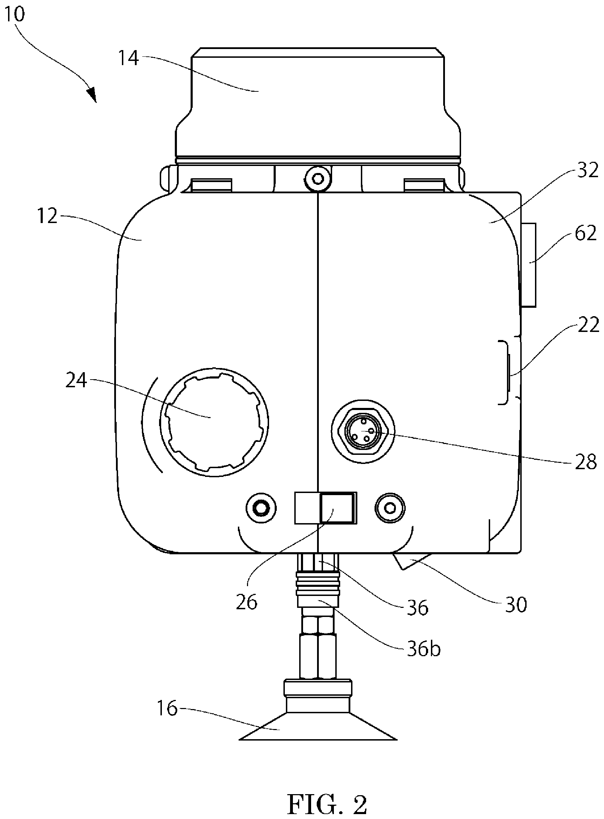

As shown in Fig. 1, the body unit 12 has a timer 18, a pressure display monitor 20, and an error lamp 22 arranged on the front thereof. As shown in Fig. 2, on a side face of the body unit 12 are arranged a regulator 24, a mode selecting switch (mode selecting device) 26, and a communication cable connector (communication part) 28 for communication connection to an external control device. In addition, a main power switch 30 of the suction holding apparatus 10 is disposed on the bottom of the body unit 12.

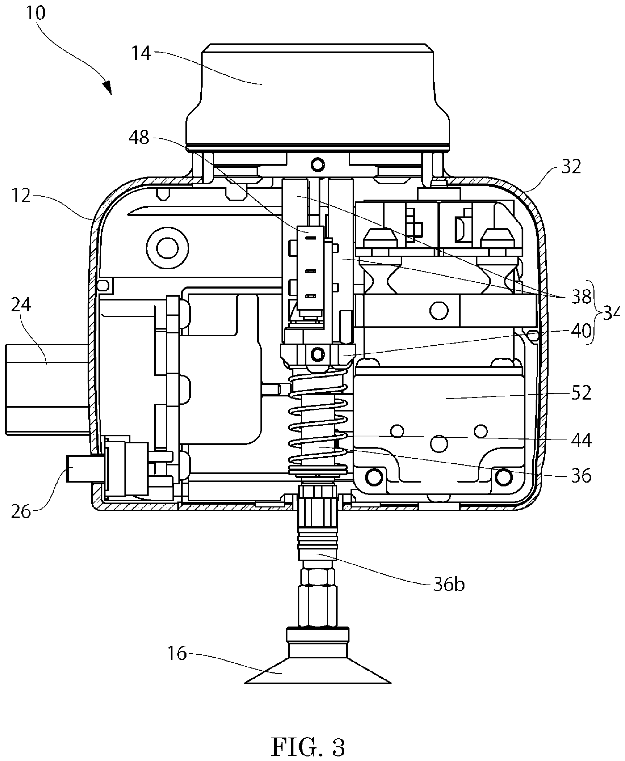

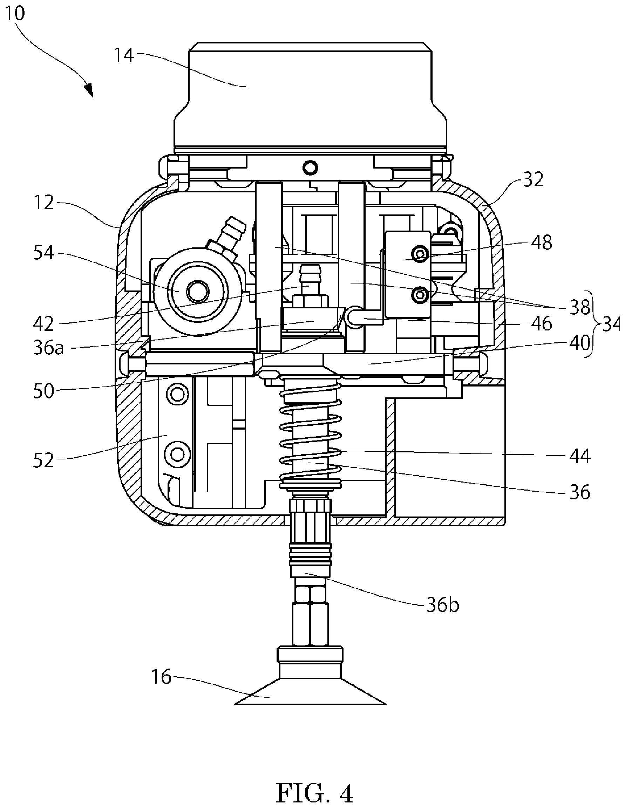

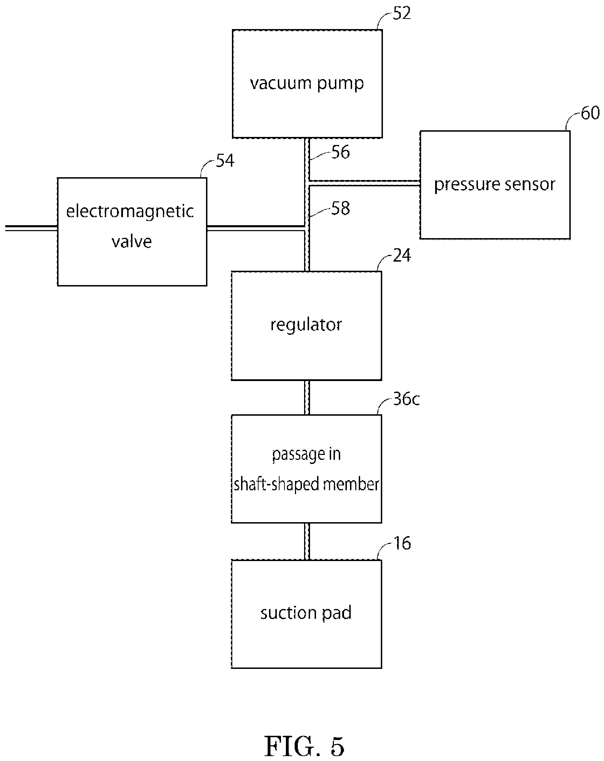

As shown in Figs. 3 and 4, the body unit 12 has a casing 32 in which a frame 34 attached to the arm fixed unit 14 and a shaft-shaped member 36 supported by the frame 34 are arranged. The frame 34 comprises four support members 38 extending downward from the arm fixed unit 14, and a plate-shaped member 40 secured to the support members 38 to extend horizontally. The shaft-shaped member 36 is attached to the plate-shaped member 40 of the frame 34 so as to be vertically movable relative to the plate-shaped member 40. The shaft-shaped member 36 extends vertically from an upper end portion 36a thereof supported by the frame 34 to a lower end portion 36b thereof located outside the casing 32. The shaft-shaped member 36 has the suction pad 16 detachably attached to the lower end portion 36b. The upper end portion 36a of the shaft-shaped member 36 is provided with a tube connecting portion 42 configured to be fitted with a tube 56 (see Fig. 5), and the shaft-shaped member 36 has a passage 36c (Fig. 5) formed therein to extend from the tube connecting portion 42 to the lower end portion 36b. The shaft-shaped member 36 is urged downward by a spring 44, so that when the suction pad 16 is pressed against an object to be transferred, the shaft-shaped member 36 moves upward while compressing the spring 44. In the casing 32, a microswitch 48 having a lever 46 is also disposed. The lever 46 of the microswitch 48 is located at a position where the lever 46 is engageable with a switch engaging portion 50 of the shaft-shaped member 36. When the shaft-shaped member 36 is at a lower end position shown in the figures, the lever 46 of the microswitch 48 is engaged with the switch engaging portion 50 of the shaft-shaped member 36 and thus pushed in, so that the microswitch 48 is placed in an off-state. When the shaft-shaped member 36 moves upward, the lever 46 is disengaged from the switch engaging portion 50 and thus released from being pushed in, causing the microswitch 48 to turn on. The suction holding apparatus 10 is configured to enter a suction holding state when the suction pad 16 is pressed against a workpiece to be transferred and the microswitch 48 is turned on.

In the casing 32 of the body unit 12, a vacuum pump (vacuum source) 52 and an electromagnetic valve 54 are also disposed. As shown in Fig. 5, the vacuum pump 52 is in fluid communication with the passage 36c of the shaft-shaped member 36 through the tube 56 (not shown in Figs. 3 and 4). The passage 36c constitutes a part of a flow path 58 extending between the suction pad 16 and the vacuum pump 52 through the tube 56. The electromagnetic valve 54 is connected to the flow path 58 at a position between the vacuum pump 52 and the shaft-shaped member 36. When opened, the electromagnetic valve 54 allows the flow path 58 between the vacuum pump 52 and the shaft-shaped member 36 to open to the atmosphere. A pressure sensor 60 is also connected to the flow path 58. The pressure sensor 60 measures the pressure in the flow path 58, and the measured pressure value is displayed on the above-described pressure display monitor 20. The regulator 24 regulates the pressure in the flow path 58, which is produced by the vacuum pump 52. It should be noted that the magnitude of the pressure regulated by the regulator 24 can be changed by operating a knob exposed to the outside of the body unit 12.

The suction holding apparatus 10 operates as follows. When the suction pad 16 is pressed upward and the microswitch 48 is turned on, the suction holding apparatus 10 enters a suction holding state where vacuum suction holding force is produced in the suction pad 16. When a preset duration time has elapsed from the start of the suction holding state, the suction holding apparatus 10 is switched to a non-suction holding state where no vacuum suction holding force is produced. More specifically, when the microswitch 48 turns on, the electromagnetic valve 54 is closed, and the vacuum pump 52 is started, thereby causing vacuum suction holding force to be produced in the suction pad 16 through the passage 36c in the shaft-shaped member 36. When a preset duration time has elapsed, the vacuum pump 52 is stopped, and the electromagnetic valve 54 is opened to open the flow path 58 to the atmosphere, thereby allowing the pressure in the flow path 58 to increase to the atmospheric pressure, and thus enabling the vacuum suction holding force in the suction pad 16 to be removed rapidly. It should be noted that it is possible to set upper- and lower-limit vacuum pressures in the suction holding state by operating the pressure display monitor 20. When the pressure value measured by the pressure sensor during the suction holding state exceeds the upper-limit vacuum pressure, the vacuum pump 52 is temporarily stopped, and when the measured pressure value falls below the lower-limit vacuum pressure, the vacuum pump 52 is restarted. Thus, the vacuum suction holding force produced in the suction pad 16 is maintained within a given range. It should be noted that the above-described regulator 24 can also be used to regulate the vacuum pressure so as not to exceed a given level.

In the suction holding apparatus 10, it is possible to select between an internal control mode and an external control mode with the mode selecting switch 26. When the internal control mode is selected, the duration time of the suction holding state is a value set by using the timer 18. The timer 18 has a knob (manual operation part) 62 disposed so as to be operatable from the outside. The duration time can be set and changed to a desired value by operating the knob 62. When the external control mode is selected, the setting on the timer 18 is ignored, and a duration time is set by a command from an external control device communicably connected through a communication cable. It should be noted that the communication connection to the external control device may be made by other method, e.g. wireless communication.

If the pressure measured by the pressure sensor does not decrease below a predetermined normal operation pressure value even when a predetermined time has elapsed from the start of the suction holding state, it is judged that the workpiece to be transferred is not appropriately suction-held by the suction pad 16, and the transfer operation by the robot arm is stopped. In addition, the error lamp 22 lights up to inform the situation.

In the suction holding state, the downward load applied to the suction pad 16 when the workpiece to be transferred is suction-held by the suction pad 16 is not applied to the casing 32 but supported by the arm fixed unit 14 through the shaft-shaped member 36 and the frame 34. In this embodiment, the casing 32 is formed of a resin of not very high mechanical strength, and the shaft-shaped member 36, the frame 34 and the arm fixed unit 14 are formed of a metal of high mechanical strength. Therefore, even when a relatively heavy workpiece is suction-held, the load of the workpiece is applied only to the members of high mechanical strength. Accordingly, the workpiece to be transferred can be held in a stable condition.

The suction holding apparatus 10 is configured to allow the duration time of the suction holding state to be set by operating the knob 62 of the timer 18, which is provided in the body unit 12. Therefore, it is possible to easily change the timing at which the suction holding state is switched to the non-suction holding state without modifying the control program, which has been required in the past. It should be noted that although in the above-described embodiment the duration time of the suction holding state is set by the timer 18, the duration time of the non-suction holding state may be set instead of that of the suction holding state.

Although an embodiment of the present invention has been explained above, the present invention is not limited to the foregoing embodiment. For example, the vacuum pump need not be provided in the body unit, but instead the apparatus may be connected to an external vacuum source through a tube or the like. In such a case, the arrangement may, for example, be as follows. In the suction holding state, the suction pad and the external vacuum source are in fluid communication with each other through the electromagnetic valve, and in the non-suction holding state, the suction pad and the external vacuum source are cut off from each other by the electromagnetic valve, and the suction pad-side flow path is opened to the atmosphere. In addition, although in the foregoing embodiment the suction holding state is started by detecting with the microswitch that the suction pad has been pushed toward the body unit side, the suction holding state or the non-suction holding state may be started on the basis of detecting that the suction holding apparatus has reached a predetermined position by using an optical sensor, e.g. a camera, or detecting that the robot arm has reached predetermined coordinates by encoders at joints of the robot arm. Furthermore, the manual operation part for setting and changing the duration time by the timer is not necessarily limited to a device using a knob, but it is possible to use devices of various forms, e.g. those using a button operation or a touch panel.

### List of Reference Signs:

10: suction holding apparatus
12: body unit
14: arm fixed unit
16: suction pad (suction holding unit)
18: timer
20: pressure display monitor
22: error lamp
24: regulator
26: mode selecting switch (mode selecting device)
28: communication cable connector (communication part)
30: main power switch
32: casing
34: frame
36: shaft-shaped member
36a: upper end portion
36b: lower end portion
36c: passage
38: support members
40: plate-shaped member
42: tube connecting portion
44: spring
46: lever
48: microswitch
50: switch engaging portion
52: vacuum pump (vacuum source)
54: electromagnetic valve
56: tube
58: flow path
60: pressure sensor
62: knob (manual operation part)

## Claims

1. A suction holding apparatus for a robot that is configured to be used by being attached to a robot arm, the suction holding apparatus comprising:
a suction holding unit configured to be connected to a vacuum source to suction-hold a workpiece to be transferred; and
a timer for switching between a suction holding state where vacuum suction holding force is produced in the suction holding unit by the vacuum source and a non-suction holding state where the vacuum suction holding force is not produced in the suction holding unit, the timer being capable of setting a duration time of at least one of the suction holding state and the non-suction holding state, the timer having a manual operation part for setting and changing the duration time;
wherein when the duration time set by the timer has elapsed, the one of the suction holding state and the non-suction holding state is switched to the other of the suction holding state and the non-suction holding state.

2. The suction holding apparatus of claim 1, wherein the timer is configured to set the duration time of the suction holding state, so that after the duration time has elapsed, the suction holding apparatus is switched from the suction holding state to the non-suction holding state.

3. The suction holding apparatus of claim 1, wherein the vacuum source is a vacuum pump built in the suction holding apparatus.

4. The suction holding apparatus of claim 1, further comprising:
a communication part for communication connection to an external control device; and
a mode selecting device for selecting between an internal control mode and an external control mode;
wherein when the internal control mode is selected, the duration time is set by the timer, and when the external control mode is selected, the duration time is set based on a command from an external control device communicably connected to the communication part.

5. The suction holding apparatus of any one of claims 1 to 4, further comprising:
an arm fixed unit configured to be fixed to a robot arm;
a frame attached to the arm fixed unit;
a casing covering at least a part of the frame; and
a shaft-shaped member having an upper end portion supported by the frame in the casing and a lower end portion located outside the casing, the shaft-shaped member extending vertically from the upper end portion to the lower end portion, the suction holding unit provided at the lower end portion, the shaft-shaped member having a passage formed therein to constitute a part of a flow path between the suction holding unit and the vacuum source;
wherein a downward load applied to the suction holding unit is supported by the arm fixed unit through the shaft-shaped member and the frame.
